# EUROPEAN PATENT SPECIFICATION

(11) **EP 3 675 308 B1**
(45) Date of publication and mention of the grant of the patent: **30.08.2023**
(21) Application number: 19187442.9
(22) Date of filing: 19.07.2019
(51) Int. Cl.: H02J 3/38, H02J 3/14, H02S 10/20

(54) **AN ACTIVE POWER CURTAILMENT MANAGEMENT SYSTEM**
SYSTEM ZUR AKTIVEN LEISTUNGSKÜRZUNGSVERWALTUNG
SYSTÈME DE GESTION DE RÉDUCTION DE PUISSANCE ACTIVE

(30) Priority: 27.12.2018 EP 18248012
(43) Date of publication of application: 01.07.2020
(73) Proprietor: VITO NV, 2400 Mol (BE)
(72) Inventor: ALAM, Mohammad Meraj, 3500 Hasselt (BE); RAUF, Abdul Mannan, 3500 Hasselt (BE)
(74) Representative: Nederlandsch Octrooibureau

(56) References cited:
- WO-A1-2017/193172
- US-A1- 2010 076 613
- US-A1- 2017 250 540
- WECKX SAM ET AL: "Load Balancing With EV Chargers and PV Inverters in Unbalanced Distribution Grids", IEEE TRANSACTIONS ON SUSTAINABLE ENERGY, IEEE, USA, vol. 6, no. 2, 1 April 2015 (2015-04-01), pages 635-643, XP011576077, ISSN: 1949-3029, DOI: 10.1109/TSTE.2015.2402834 [retrieved on 2015-03-18]
- WIEBE DANIEL ET AL: "Photovoltaic inverter dispatch for voltage regulation in power distribution systems: A comparative evaluation", 2016 NORTH AMERICAN POWER SYMPOSIUM (NAPS), IEEE, 18 September 2016 (2016-09-18), pages 1-6, XP033007491, DOI: 10.1109/NAPS.2016.7747976 [retrieved on 2016-11-17]

## Description

### FIELD OF THE INVENTION

The present invention is related to the problem of Active Power Curtailment (APC) in single/multiple-phase photovoltaic (PV) systems. During the APC, the inverter in a grid-connected single/multiple-phase PV system fails to inject active power into the low voltage distribution network due to the violation of network voltage upper limit (e.g. 1.10 per unit or 253 V in Belgium), which leads to a loss of PV power. Therefore, the main focus of the present invention is to minimize this PV power loss to zero by providing a solution/system in order to prevent or reduce APC of such single/multiple-phase PV systems.

### BACKGROUND TO THE INVENTION

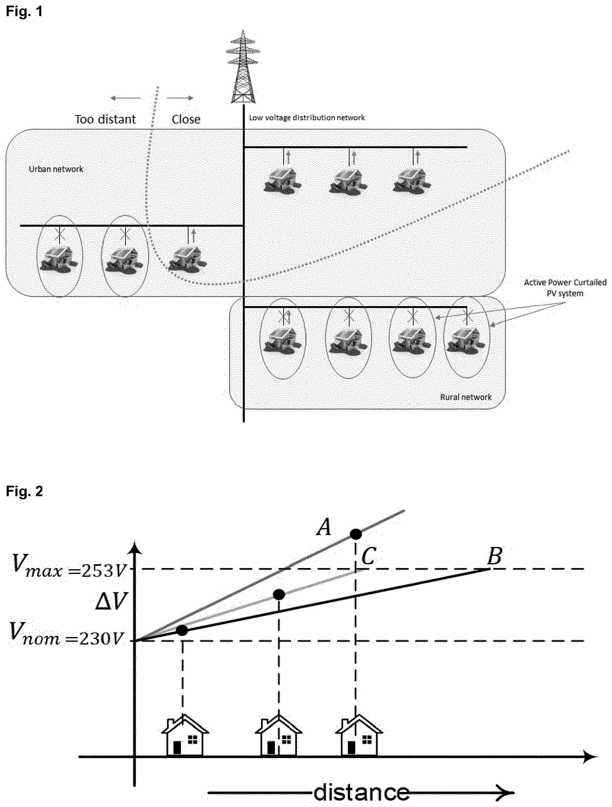

Single/multiple-phase PV systems in low voltage distribution network suffer from the problem of APC when the phase voltages at the point of interconnection (POI) of PV inverter to the low voltage distribution network hit the network voltage upper limit (which is typically 10% above the nominal voltage of 230 V rms such as in Belgium i.e. 253 V rms or 1.10 per unit). This is more prominent among rooftop PV systems which are located near the end of the distribution network or far away from the substation transformer (refer Fig. 1). This is because, in a low voltage distribution network, active power and phase voltages are directly related to each other in such a way that the phase voltages increase (overvoltage condition) with the increase in active power injection and decrease (under voltage condition) with the increase in active power drawn. Additionally, the sensitivity of phase voltages plays an important role, which increases with the increase in the distance from the substation transformer in a low voltage distribution network (refer Fig. 2). This means that the phase voltages near the end of distribution network are far more sensitive and susceptible to changes with the active power injected or drawn as compared to near the substation transformer.

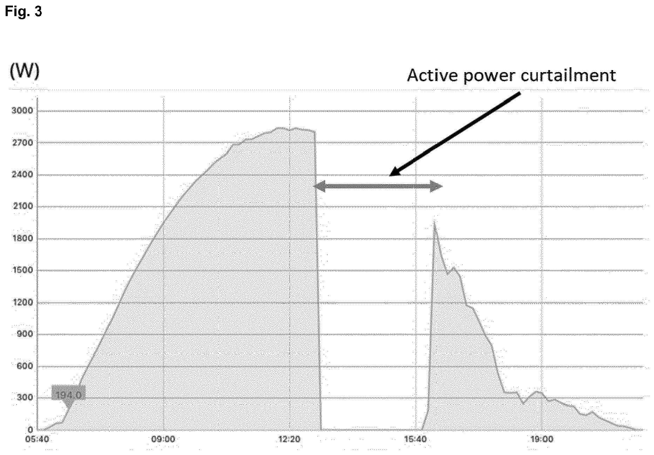

With the rise in installation of single-phase rooftop PV systems and corresponding increase in active power injection in a low voltage distribution network, as shown in Fig. 1, the voltage of the electrical network at the POI of PV inverters also rises. On the other hand, the distribution system operators (DSO) like to maintain the phase voltages of low voltage distribution network typically between the operating limits such as 0.90 per unit (207 V rms) to 1.10 per unit (253 V rms) for safe and stable operation. Thus, to keep the phase voltages within the said limits, the inverters of such single-phase PV systems are shut down and their active power injection into the low voltage distribution network are curtailed (see Fig. 3). The duration of APC ranges from 8% to 15% of the total PV power production hours in a year. In Belgium, it accounts for 80 to 150 hours of APC per year, which is a significant amount of PV power curtailed because of which single-phase rooftop PV system homeowners suffer from the decrease in return on investment (ROI).

Distribution network phase voltage balancing systems for maintaining a balanced load condition in response to variations in the load applied to one or more phases of a multi-phase system are for example known from US2652529, DE102009060364, CN104333035, Sam Weckx et al. (S. Weckx and J. Driesen, "Load Balancing With EV Chargers and PV Inverters in Unbalanced Distribution Grids," in IEEE Transactions on Sustainable Energy, vol. 6, no. 2, pp. 635-643, April 2015, doi: 10.1109/TSTE.2015.2402834) or WO2012175332. CN104333035 provides a system capable of restraining network voltage imbalance by automatically output compensating current. Sam Weckx et al. proposes three-phase balancing inverters and off-board three phase Electric Vehicle (EV) chargers in a distribution network to improve network voltage conditions by absorbing power from a phase with a lower loading and injecting into the phase with the highest loading. These balancing inverters and offboard EV chargers are additional components compared to the single-phase PV inverters and chargers typically found in homes which distribute the current among three phases. Sam Weckx et al. objective is to balance the network voltage. US 2652529 patent deals with phase balancing system by energizing a capacitive reactance, an inductive reactance and a variable single-phase load from different phase conductors of three-phase system. The patent DE102009060364 links the phase unbalance to charging of EVs, but is equally silent on active power curtailment management. The same holds true for WO2012175332 which is controlling the load of the phases of a three-phase system by means of a controllable switch element.

WO2017193172A1 relates to predicting a level of solar radiation, such as a solar irradiance or power. For example, the predicted solar irradiance can be used for controlling solar power systems. US2010076613A1 relates generally to energy management systems. More specifically, the present disclosure relates to a system, method, and module capable of curtailing energy production within congestive grid operating environments. US2017250540A1 relates to power generation facilities. More specifically, the present invention provides methods and systems for operating a power generation facility such as a photovoltaic (PV) solar farm. Wiebe Daniel et al. (D. Wiebe, F. Mancilla-David, M. Carrasco and A. Bunaiyan, "Photovoltaic inverter dispatch for voltage regulation in power distribution systems: A comparative evaluation," 2016 North American Power Symposium (NAPS), 2016, pp. 1-6, doi: 10.1109/NAPS.2016.7747976) relates to a comparative evaluation of methods for choosing the PV inverter set-points, comparing local decentralized methods to a variety of optimal power flow-based algorithms. Utility concerns, namely voltage regulation and line losses, are balanced against the customer concerns of maximum profit from owned PV systems.

Where these prior art deal with improving the efficiency, reliability, and energy performance through balancing the network by measuring unbalance, switching single phase loads to the phase that is least loaded using current measurements, and distributing the current between lower and highest loaded phases, these system are not interested in using the available phase voltages to determine whether the active power injected by a single/multiple-phase PV inverter is restricted because of phase voltage limits, and to take the necessary measures in preventing such restriction in active power production to occur.

It is an objective of the present invention to prevent or reduce APC of single/multiple-phase rooftop PV system because of the phase voltage limitation in low voltage distribution network. Thereto, and as further detailed hereinafter, the present invention provides a system to manage that curtailed active power that can be utilized by using one or more of the following actions:
- Injection into the low voltage distribution network by switching the POI of inverter of single-phase PV system between the phases,
- locally storage in an energy storage device like a battery by predicting time and duration of APC in advance and preparing the battery beforehand, and/ or
- consume in household load(s) like heating and/or refrigerating device(s) inside homes, by predicting time and duration of APC in advance and preconditioning said battery storage system and household load(s) so that they can act as energy buffers in the off-grid mode from low voltage distribution network comprising the PV system.

### SUMMARY OF THE INVENTION

The invention is set out in the appended set of claims. The embodiments and/or examples of the following description which are not covered by the appended claims are considered as not being part of the present invention.

In a first example, an APC management system is provided to prevent or reduce APC in the inverter of a rooftop PV system, which are connected to low voltage distribution network, using household load(s), comprising;
- A phase voltage input module;
- A microcontroller;
- A primary relay configured to connect or disconnect the rooftop PV system from said phase(s); and
- A secondary relay configured to connect or disconnect the rooftop PV system from said household load(s);
wherein the microcontroller is configured to use actual PV power generation data, real-time PV inverter injected active power data and phase voltage(s) input data as an input to determine APC and to prevent or reduce APC by opening and/or closing of the primary and/or secondary relay(s).

In order to enable full prevention of APC to occur, the microcontroller is preferably configured to use day-ahead PV output power forecast data to predict time and duration of APC in advance and take preemptive action by preparing the household load(s) beforehand to absorb the single/multiple-phase PV inverter output power during the APC. Thus the microcontroller in the APC management system may be further configured to;
- use day-ahead PV output power forecast data to predict time and duration of APC in advance and preconditioning said household load(s) so that they can act as energy buffers in the off-grid mode from low voltage distribution network comprising the PV system; and
- use actual PV power generation data, real-time PV inverter injected active power data and phase voltage(s) input data as an input to determine APC and to prevent or reduce APC by opening and/or closing of the primary and/or secondary relay(s)

The system receives information on phase voltage(s) of low voltage distribution network through the phase voltage input module. This module could be based on known phase voltage measurement unit(s) such as found in phase balancing system(s).

As mentioned herein before, the APC management system as herein provided is typically installed behind the meter and connected to a low voltage distribution network, including single-phase or multiple-phases, such as in a 3-phase low voltage distribution network. In said embodiments wherein the system is connected to a multiple-phase distribution network; in particular a 3-phase distribution network it comprises;
a phase voltage input module for each phase; and
a plurality of primary relay(s) configured to connect or disconnect the rooftop PV system to each of said phase(s).

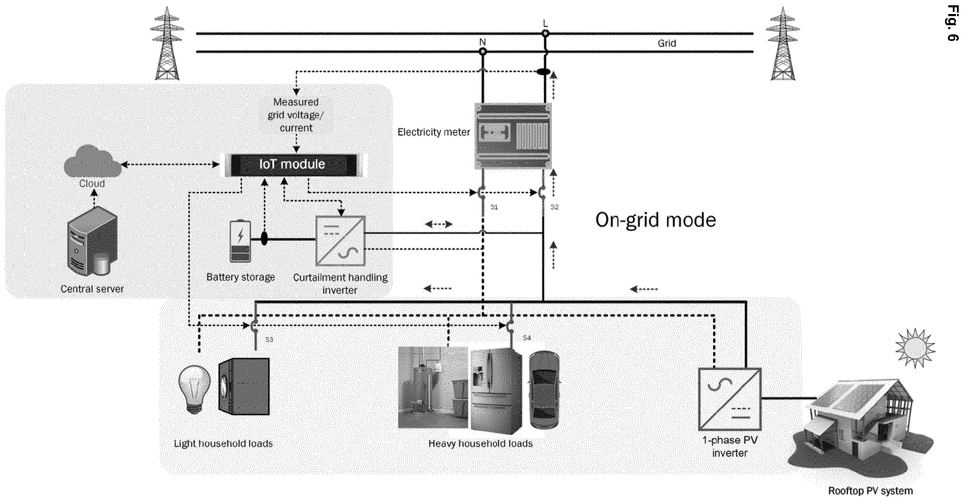

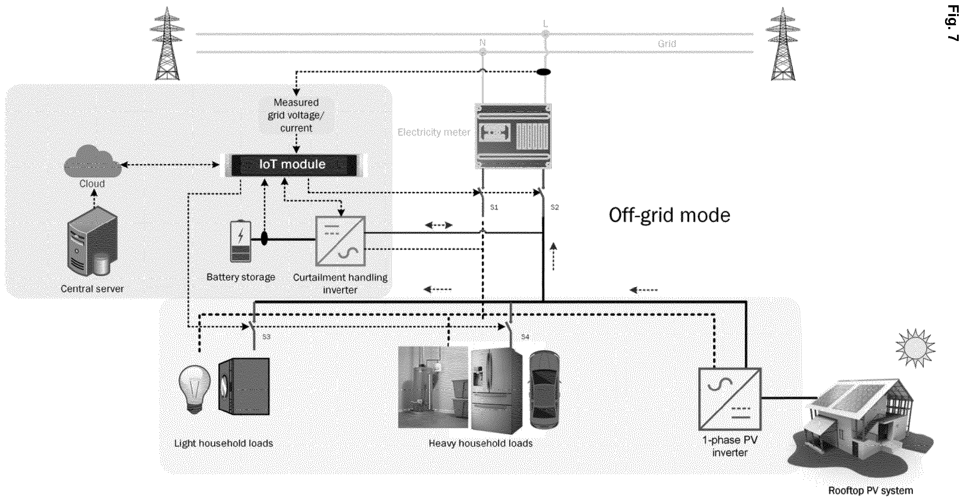

It follows from the foregoing that in case of multiple incoming phases in a household, a primary relay for each phase is preferable. Such configuration allows the system to dynamically switch between said phases. A similar degree of flexibility can equally be achieved in connecting or disconnecting the household load(s), in case said household loads are distributed over a plurality of secondary relay(s). Thus, the APC management system may also comprise a plurality of secondary relay(s) each configured to connect or disconnect the single/multiple-phase rooftop PV system from a plurality of household load(s). The system can even enter into an off-grid mode wherein it is fully disconnected from the phases, thus providing full flexibility to the system in preventing and reducing APC to occur. In said off-grid configuration the system can further comprise a curtailment handling (CH) inverter, a battery storage system and a remote central server, as shown in Fig. 6 and 7. Such CH inverter will enable conversion of the grid-connected household network into an islanded grid/off-grid/nanogrid, i.e. a network with a small number of nodes like a household that can realize a functional islanded/off-grid by complete separation from the low voltage distribution network. Thereto the CH inverter is specifically configured to set the nominal voltage (e.g. 230 V rms) and a nominal frequency (e.g. 50 Hz) at its AC terminals when the single/multiple-phase rooftop PV system is disconnected from the voltage phases of the low voltage distribution network.

The plurality of household load(s) within the context of the present invention could be any electric household device(s), which can use the curtailed active power when it occurs. Such household load(s) could for example be selected from a battery storage system, heating or cooling devices. For example, in case of a battery storage system, by adjusting the state of charge (SOC) to a lower level in the evening when there is no PV power production, curtailed PV active power can be absorbed by said battery storage system during APC. In the off-grid mode the battery storage system can participate through the CH inverter in controlling the voltage and frequency of the islanded grid/off-grid/nanogrid in accordance with the nominal voltage and frequency e.g. 230 V rms and 50 Hz set by the CH inverter. As an example when during APC the rooftop PV inverter is generating more active power than the household load(s) demand, then the CH inverter will absorb the excess power produced into the battery storage system. On the contrary, when during APC the rooftop PV inverter is generating insufficient power and the islanded grid/off-grid/nanogrid voltage tends to decrease, the CH inverter will draw power from the battery storage system to maintain the voltage and frequency of the islanded grid/off-grid/nanogrid in accordance with the nominal voltage set by the CH inverter.

For example, in case of a household heating device, such as a hot water boiler, the set temperature of the boiler can be lowered beforehand and curtailed PV active power can be utilized to boil the water by elevating the temperature in case an APC occurs. For example, in case of a heat pump room or pool temperature can be adjusted to a lower or higher temperature and heating or refrigeration activated in case of APC events to tap curtailed PV active power. It follows from the foregoing that as part of APC management, the system is configured to prepare the battery storage system and household load(s) in advance to absorb the curtailed PV active power in preventing or reducing the APC. As already mentioned hereinbefore, this adjustment is preferably based using day-ahead PV output power forecast data. The APC management system may be configured to use day-ahead PV output power forecast data to predict time and duration of APC in advance and take preemptive action by preparing the battery storage system and household load(s) beforehand to absorb the PV inverter output power during the APC in preventing or reducing the APC; more in particular, the microcontroller in an APC management system according to the invention is further characterized in being configured to use day-ahead PV output power forecast data to prepare the battery storage system and household load(s) in preventing or reducing the APC.

In determining the occurrence of APC, the system makes use of actual PV power generation data, real-time PV inverter injected active power data and phase voltage input data. Where the phase voltage input module yields the phase voltage input data, and the real-time PV inverter injected active power data is directly available as an output from the ac terminal of PV inverter. Day-ahead PV output power forecast data and actual PV power generation data are for example available from a power grid system operator like Elia in Belgium. Said data are either the accumulated day-ahead PV output power forecast for the installed solar capacity of a country, region, network and the accumulated real-time actual PV power generation data for the installed solar capacity of a country, region, network. In its simplest form, the day-ahead PV output power forecast data for the single/multiple-phase rooftop PV system are a downscale of said accumulated day-ahead PV output power forecast in accordance with the geographical location of said single/multiple-phase rooftop PV system. In analogy, in its simplest form, the actual PV power generation data for the single/multiple-phase rooftop PV system are a downscale of said accumulated real-time actual PV power generation data in accordance with the geographical location of said single/multiple-phase rooftop PV system. A further refinement of the accumulated day-ahead PV output power forecast data and of the accumulated actual PV power generation data is possible by means of further technical data relevant for the local single/multiple-phase rooftop PV system. Such further technical data could for example include azimuth, inclination, and solar irradiation of the single/multiple-phase rooftop PV system.

In accordance with the European regulator guideline, Power Grid transmission system operators like Elia in Belgium are not only obliged to provide actual PV power generation data, also day-ahead PV output power forecast data must be made available online. Consequently, the actual PV power generation data, as well as the day-ahead PV output power forecast data can be retrieved either directly or through a dedicated and remote central server of the APC management system.

The presence of such remote central server, allows for example to adjust the accumulated actual PV power generation data and the day-ahead PV output power forecast data in accordance with the geographical location and technical details of the local single/multiple-phase rooftop PV system before being transmitted to the microcontroller in the APC management system. Alternatively, the actual PV power generation data are directly transmitted to the microcontroller and adjusted in accordance with the geographical location and technical details of the local single/multiple-phase rooftop PV system by said microcontroller. In either case, the system further comprises communication means to receive actual PV power generation data and day-ahead PV output power forecast data from a remote central provider.

In order to enable that the system adjusts the actual PV power generation data and day-ahead PV output power forecast data based on the geographical location and technical details of the single/multiple-phase rooftop PV system, the system further comprises a single/multiple-phase rooftop PV system data module configured to receive technical data of the single/multiple-phase rooftop PV system such as capacity, azimuth, inclination, and solar irradiation of the single/multiple-phase rooftop PV system. It will be evident that the aforementioned methods to adjust the accumulated actual PV generation data are equally applicable for the day-ahead PV output power forecast data available from such Power Grid transmission system operators.

It is also provided a method for APC management of a single/multiple-phase rooftop PV system comprising a single/multiple-phase PV inverter connected to any phase(s) of a low voltage distribution network; using a microcontroller connected to primary relay(s) configured to connect or disconnect the single/multiple-phase rooftop PV system from said phase(s); and connected to one or more secondary relay(s) configured to connect or disconnect the single/multiple-phase rooftop PV system from household load(s) in a household network, said method comprising
Providing phase voltage input data to said microcontroller;
Providing actual PV power generation data to said microcontroller; and
Providing real-time PV inverter injected active power data to said microcontroller;
wherein said microcontroller compares the magnitude of the actual PV power generation data with the magnitude of the real-time PV inverter injected active power data and commands the primary and/or secondary relay(s) when there is a difference in magnitude which is increasing with time such that the rate of change of real-time PV inverter injected active power data is greater than 500 W/minute and the phase voltage violates the network voltage upper limit for example 1.10 per unit or 253 V rms from the nominal voltage of low voltage distribution network in Belgium.

The comparison between the magnitude of actual PV power generation data and real-time PV inverter injected active power data is crucial to determine APC even if the network voltage violates the upper limit such as 1.10 per unit or 253 V rms. This is because a PV inverter in a single/multiple-phase rooftop PV system does not curtail its active power instantaneously even when the network voltage violates the upper limit instead the PV inverter waits to rule out any temporary overvoltage situation. There might be a possibility that the network voltage violates the upper limit for a very short duration (few cycles) and returns back to its operating limit. Curtailing PV inverter injected active power for this short duration does not make sense. This means that the PV inverter output power could remain uncurtailed at or above network voltage upper limit such as 253 V rms for a considerable duration. Therefore, activating an APC management system only on the basis of network voltage upper limit violation is not sufficient enough. Hence, comparison of actual PV power generation data and real-time PV inverter injected active power data is performed.

The APC management system activates when both the network voltage violates its upper limit and there is a difference between the actual PV power generation data and the real-time PV inverter injected active power data where this difference is increasing rapidly with time such as for example that the rate of change of real-time PV inverter injected active power data is greater than 100, 200, 300, 400, or 500 W/minute.

The microcontroller may send commands to the primary relay(s) to disconnect from said phase(s) and commands at least one of the secondary relays to connect to the household load(s) when the real-time PV inverter injected active power becomes unequal with actual PV power generation where this difference is increasing rapidly with time such that the rate of change of real-time PV inverter injected active power data is for example greater than 250 W/minute, in particular greater than 500 W/minute, and the phase voltage violates the network voltage upper limit.

In those cases wherein the microcontroller commands the primary relay(s) to disconnect from said phase(s) and commands at least one of the secondary relays to connect to the battery storage system and household load(s) when the phase voltage violates the network voltage upper limit, and the real-time PV inverter injected active power becomes unequal with actual PV power generation data and this difference is increasing rapidly with time such that the rate of change of real-time PV inverter injected active power data is for example greater than 500 W/minute, the system could enter into an islanded grid/off-grid/nanogrid mode. Thus, the microcontroller may further command a CH inverter present between the incoming phase(s) in a household and the battery storage system (refer Fig. 6 and 7), to set and maintain a nominal voltage (e.g. 230 V rms) and a nominal frequency (e.g. 50 Hz) at its AC terminals, converting the household network into a islanded grid/off-grid/nanogrid.

The microcontroller may command the CH inverter to maintain the nominal voltage (e.g. 230 V rms) and the nominal frequency (e.g. 50 Hz) at its AC terminals, by injecting or drawing power to/from battery storage system present in the system and/or within the isolated household network.

In those cases wherein the single/multiple-phase rooftop PV inverter system in the APC management system is connected to any phase(s) of a low voltage distribution network, and the microcontroller connected to plurality of primary relays configured to connect or disconnect the single/multiple-phase rooftop PV inverter system from each of said phases, the method for APC management comprises
Providing phase voltage input data from each of said phase(s) to said microcontroller;
Providing actual PV power generation data to said microcontroller; and
Providing real-time PV inverter injected active power data to said microcontroller;
wherein said microcontroller compares the magnitude of the actual PV power generation data with magnitude of the real-time PV inverter injected active power data and commands the primary and/or secondary relay(s) when the real-time PV inverter injected active power becomes unequal with actual PV power generation data where this difference is increasing rapidly with time such that the rate of change of real-time PV inverter injected active power data is for example greater than 250 W/minute, in particular greater than 500 W/minute and the phase voltage violates the network voltage upper limit.

Alternatively, the microcontroller commands the primary relay of the phase to which the PV inverter is connected to disconnect from said phase and commands one of the other primary relays to connect to the other phase of the 3-phase distribution network if the phase voltage of said other phase is below the network voltage upper limit; or commands at least one of the secondary relay(s) to connect to the battery storage system and household load(s) when the real-time PV inverter injected active power becomes unequal with actual PV power generation data where this difference is increasing rapidly with time such that the rate of change of real-time PV inverter injected active power data is for example greater than 500 W/minute and the phase voltage violates the network voltage upper limit.

Day-ahead PV output power forecast data may be provided to the microcontroller, and used by said microcontroller to predict time and duration of APC in advance and take preemptive action by preparing the household load(s) beforehand to absorb the PV inverter output power during the APC in preventing or reducing the APC. Within the methods the household load(s) preferably include battery storage system and at least one of the secondary relays is configured to connect or disconnect the single/multiple-phase rooftop PV system from such battery storage system. When the battery storage system is available, the microcontroller uses said day-ahead PV output power forecast data to prepare the battery storage system in preventing or reducing the APC by reducing the battery SOC.

Further to the above, the actual PV power generation data and the day-ahead PV output power forecast data may be adjusted for the technical data of the single/multiple-phase rooftop PV system. This could be done either at a remote central server or by the microcontroller of the APC management system.

Thus the adjustments can comprise:
- the actual PV power generation data are adjusted for the technical data of the single/multiple-phase rooftop PV installation; in particular the actual PV power generation data are adjusted for the technical data of the single/multiple-phase rooftop PV system by the microcontroller or at a remote central server; or
- the day-ahead PV output power forecast data are adjusted for the technical data of the single/multiple-phase rooftop PV installation; in particular the day-ahead PV output power forecast data are adjusted for the technical data of the single/multiple-phase rooftop PV system by the microcontroller or at a remote central server; or
- the actual PV power generation data and the day-ahead PV output power forecast data are adjusted for the technical data of the single/multiple-phase rooftop PV system; in particular by the microcontroller or at a remote central server.

### BRIEF DESCRIPTION OF THE DRAWINGS

With specific reference now to the figures, it is stressed that the particulars shown are by way of example and for purposes of illustrative discussion of the teachings of the present specification. They are presented in the cause of providing what is believed to be the most useful and readily description of the principles and conceptual aspects thereof. In this regard no attempt is made to show structural details in more detail than is necessary for a fundamental understanding of the teachings. The description taken with the drawings making apparent to those skilled in the what said teachings are and how the person skilled in the art can benefit thereform.
**Fig. 1****: Single phase PV systems in a low voltage distribution network.**
**Fig. 2****: Phase voltages sensitivity vs distance from the substation transformer in a low voltage distribution network**
**Fig. 3****: PV inverter power output curve with APC.**
**Fig. 4****: Schematic drawing of a rooftop PV** system.
**Fig. 5****: Data flow chart for the controller in an APC management** system.
**Fig. 6****: Schematic drawing of APC management system in on-grid** mode.
**Fig. 7****: Schematic drawing of APC management system in off-grid** mode.
**Fig. 8****: Data flow chart for the controller in an APC management** system.

### DETAILED DESCRIPTION

The present teaching solves the problem of APC for single/multiple-phase PV system. As explained above, APC occurs when the phase voltages at the POI of PV inverter to the low voltage distribution network hits the network voltage upper limit (such as which is 10% above the nominal voltage of 230 V rms in Belgium i.e. 253 V rms or 1.10 per unit).

The APC management system disclosed herein will monitor the phase voltages at the POI of PV inverter to the low voltage distribution network and based on actual PV power generation data and the real-time PV inverter injected active power data, the system is configured to determine whether APC occurs and to prevent or reduce such APC by dynamically disconnecting it from the phase(s) that is violating the network voltage upper limit such as 1.10 per unit or 253 V rms and re-connecting it to either of the voltage phases that is within the voltage limits; or household load(s) like battery storage system, heating or refrigerating device(s) to absorb the curtailed PV active power.

Given the ability to switch to household load(s), wherein such household load(s) are preconditions to using day-ahead PV output power forecast data, the APC system disclosed herein is highly flexible and can even be implemented in single/multiple-phase rooftop PV systems connected through a single/multiple-phase with a low-voltage distribution network. Hence the APC management system is configured to determine whether APC occurs as herein describes and prevents or reduces APC by commanding the secondary relay(s) configured to connect or disconnect the single/multiple-phase rooftop PV system from said household load(s). As further detailed below, in such circumstances the rooftop PV system will be disconnected from the low voltage distribution network and entering an off-grid configuration wherein the PV inverter active power is either directly consumed through the household load(s) and/or stored in an electrical energy storage device such as a battery.

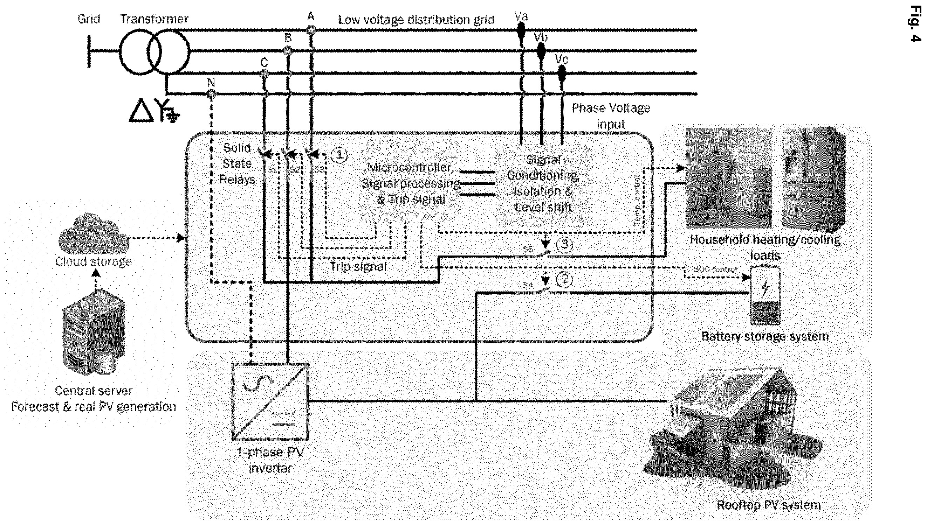

The APC management system disclosed herein is highly modular in its possibilities of reducing or preventing the APC to occur. Not to be bound to a particular order of events, when the APC management system detects an APC event it will;
i. Solve the problem of APC for single-phase rooftop PV system dynamically by disconnecting it from the phase that violates the network voltage upper limit and re-connecting it to either of the voltage phases that is within the voltage limits (by controlling S1/S2/S3 relays) to inject the curtailed PV inverter active power into the low voltage distribution network (see Fig. 4). Due to its modular characteristics, the system can be used as a plug and play module;
ii. For the homeowners at the end of the low voltage distribution network, there might be a case when all the phase voltages violate the network voltage upper limit, which means that the PV inverter active power can't be injected into the network by dynamically switching the phase(s) only. Currently, there is no technology at the homeowner level regarding the source of curtailment. To foresee such occurrence, the APC management system predicts the time and duration of APC occurrence by utilizing the day-ahead PV output power forecast data and takes preemptive actions to manage the curtailed PV active power.
   In other words, it will prepare available household load(s) like battery storage system to a state capable of storing the curtailed PV inverter active power when it occurs. Such preemptive action could, for example, include decreasing the SOC of battery storage system beforehand in order to save the curtailed PV active power and also managing the household load(s) like adjusting the set temperature of heating and/or refrigeration devices (see Fig. 4). Given the implementation of such preemptive actions, the APC management system enables that, in case all the phase voltages violate the network voltage upper limit, which means that the PV inverter active power can't be injected into the network by dynamically switching the phases only, to disconnect the single/multiple-phase PV system from the grid (by controlling S1, S2, S3, S5) and connects it to store the curtailed PV inverter active power in a battery storage system (by controlling S4) (see Fig. 4); and
iii. If the low voltage distribution network does not allow to inject the PV inverter active power due to network voltage constraint and battery storage system is either not available or completely charged, the system connects it to other household load(s) like heating or refrigeration devices (by controlling S1, S2, S3, S4 and S5) (see Fig. 4) and could even function in an off-grid configuration as further elaborated below and shown in Figures 6 and 7.

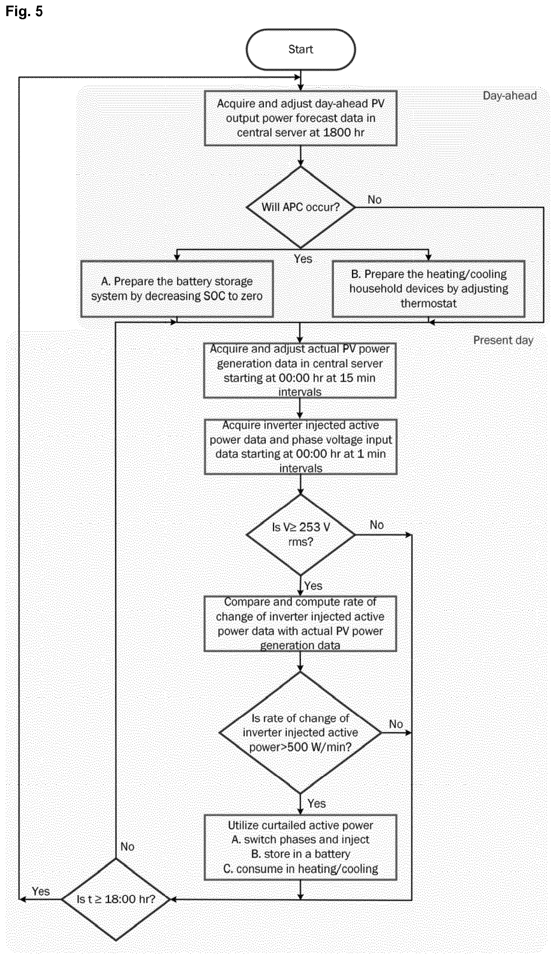

The dataflow to implement an exemplary APC management system according to the present disclosure is provided in Figure 5 and elaborated as below:
1) The day-ahead PV output power forecast data is made available in the remote central server from the transmission system operator website like Elia in Belgium (http://www.elia.be/en/grid-data/power-generation/Solar-power-generation-data/Graph) where day-ahead PV output power forecasts and actual PV power generation are uploaded online as per the European regulator guideline. These are adjusted either in the central server or locally in each single/multiple-phase rooftop PV system according to the azimuth, inclination of rooftop, and solar irradiation.
2) Based on the adjusted day-ahead PV output power forecasts, the microcontroller takes the following preemptive actions to utilize the curtailed PV active power, if it can't be injected in the low voltage distribution network due to the violation of the network voltage upper limit:
   a. prepares, if available, the battery storage system by decreasing the battery SOC beforehand such that it can be recharged during the period ofAPC;
   b. Prepares household load(s) like heating/refrigeration devices by adjusting the set temperature of heating and/or refrigeration devices beforehand such that it can be utilized further during APC; or
   c. Combinations thereof
3) During the runtime, the actual PV power generation data is then acquired in the central server from the transmission system operator website like Elia in Belgium http://www.elia.be/en/grid-data/power-generation/Solar-power-generation-data/Graph and adjusted either in the central server or locally in each single-phase rooftop PV system according to the azimuth, inclination of rooftop, and solar irradiation.
4) The microcontroller takes the actual PV power generation data, real-time PV inverter injected active power data and each phase voltage input data as an input. It compares the magnitude of the actual PV power generation data with magnitude of the real-time PV inverter injected active power data and commands the primary and/or secondary relay(s) when the real-time PV inverter injected active power becomes unequal with actual PV panel power generation data where this difference is increasing rapidly with time such that the rate of change of real-time PV inverter injected active power data is for example greater than 100, 200, 300, 400, or 500 W/minute and when the phase voltage violates the network voltage upper limit.
5) If the phase voltage violates the network voltage upper limit, and when the real-time PV inverter injected active power data becomes unequal with actual PV power generation data where this difference is increasing with time such that the rate of change of real-time PV inverter injected active power data is greater than 500 W/minute, the microcontroller is activated to ensure that the curtailed PV active power can be utilized in the following order of priority:
   a. Injection into the low voltage distribution network by switching the POI of inverter of single phase PV system between the phases,
   b. locally storage in an energy storage device like a battery by predicting time and duration of APC in advance and preparing the battery beforehand, and/ or
   c. consumed in household load(s) like heating and/or refrigerating device inside homes.
6) At the end of the day, steps 1) and 2) are repeated.

As it is an objective of the present invention to prevent and/or reduce APC events, the system relies on day-ahead PV output power forecast data to prepare household load(s) including battery storage system to act as energy buffers for such APC events. When the phase voltage(s) hits the network voltage upper limit and the difference between the real-time PV inverter injected active power data and the actual PV power generation date changes rapidly, i.e. at a rate of more than 100 W/minute, in particular more than 500W/minute, the system can switch into a full islanded grid/off-grid/nanogrid mode injecting the PV active power into the pre-conditioned battery storage system and household load(s). In such islanded grid/off-grid/nanogrid mode the household network is isolated from the low voltage distribution network by opening the primary relays shown as S1 and S2 in Figures 6 and 7. In such islanded grid/off-grid/nanogrid mode, the household network will be operating in an islanded mode as a nanogrid requiring the presence of a so named curtailment handling (CH) inverter, a battery storage system and a remote central server. The curtailment handling (CH) inverter is a bidirectional inverter which constitutes the backbone of the system.

The CH inverter is installed behind the meter between the battery storage system and incoming ac phase(s) in a household, as shown in Fig. 6 and Fig. 7. It is capable of operating during all the possible modes of operation and receives commands from the microcontroller.

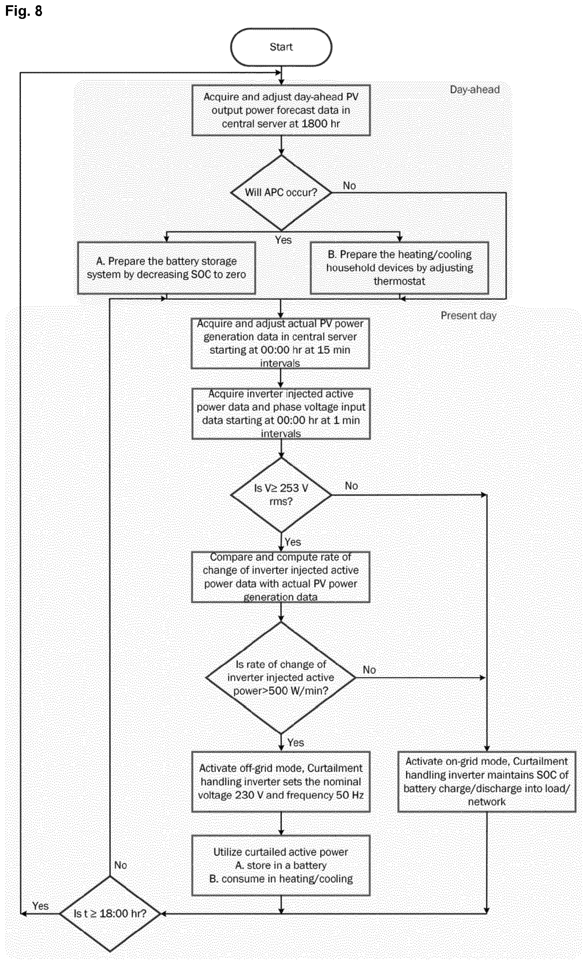

The general functioning of the CH inverter in the different modes of operation can be summarized as follows as schematically shown in Figures 6 and 7;
During on grid mode (Fig. 6):
   The household network is physically connected with the low voltage distribution network by closing S1 and S2. The frequency and voltage of the household network is always governed by the low voltage distribution network parameter. The household load(s) and single/multiple-phase rooftop PV system in the household network must follow the low voltage distribution network voltage and frequency in this mode. During on-grid mode the CH inverter is in slave configuration with respect to the frequency and voltage governed by the low voltage distribution network, and the CH inverter maintains the desired SOC of the battery storage system as requested by the microcontroller, as shown in Fig. 8. Based on the priority set by the microcontroller, the battery storage system is discharged either into household loads(s) or into low voltage distribution network or charged either from the rooftop PV system or low voltage distribution network.
During Off-grid/lslanded/nanogrid mode (Fig. 7):
   The household network is isolated from the low voltage distribution network by opening the primary relays S1 and S2. The local CH inverter sets the frequency and voltage at its AC terminals in the off-grid/islanded/nanogrid mode, and accordingly converts the isolated household network into a nanogrid. Since the single/multiple-phase rooftop PV inverter system always operates at unity power factor (zero reactive power), the CH inverter needs to perform the four quadrant operation and provide both active and reactive power to the household load(s). On the one hand if single/multiple-phase rooftop PV inverter system is generating more active power than the load(s) demand, the CH inverter absorbs the excess power through the AC terminals and maintains the nanogrid voltage at the nominal voltage of for example 230 V rms and nominal frequency for example 50 Hz. On the other hand, when the single/multiple-phase rooftop PV inverter system is generating lower than the load(s) demand, and the off-grid/islanded/nanogrid voltage tends to decrease, it supplies the household load(s) using the battery storage system energy and continue to maintain the nominal voltage of 230 V rms (refer Fig. 8).

Thus the APC management system may further comprise a curtailment handling (CH) inverter. In that case, a battery storage system may be included, said battery storage preferably being connected with said CH inverter and optionally under direct operational control of the microcontroller. Therefore, an APC management system as herein described comprises, inter alia:
- A phase voltage input module;
- A microcontroller;
- A Battery storage system;
- A curtailment handling inverter;
- A remote central provider
- A primary relay configured to connect or disconnect the incoming phases of a household network from low voltage distribution network; and
- A secondary relay configured to connect or disconnect the rooftop PV system from household load(s);

Wherein determining whether APC occurs is still relying on the actual PV power generation data, real-time PV inverter injected active power data and phase voltage(s) input data as extensively described, but further characterized in that the CH inverter sets nominal voltage and frequency at its AC terminals when entering into islanded/off-grid/nanogrid mode.

## Claims

1. An active power curtailment, APC, management system to prevent or reduce APC in an inverter of a rooftop photovoltaic, PV, system which is connectable to a low voltage distribution network comprising at least one phase, and at least one household load, comprising;
- a phase voltage input module configured to measure voltage of the at least one phase and to provide phase voltage input data;
- a microcontroller;
- at least one primary relay configured to connect or disconnect the rooftop PV system from one or more of said at least one phase; and
- at least one secondary relay configured to connect or disconnect the rooftop PV system from one or more of said at least one household load;
**characterized in that** the system comprises communication means to receive online data from a remote provider and **in that** the microcontroller is configured to determine whether APC occurs based on at least the following inputs:
- actual PV power generation data based on the online data received from the remote provider, said actual PV power generation data being a downscale of accumulated real-time actual PV power generation data in accordance with a geographical location of the rooftop PV system,
- real-time PV inverter power output data received from the inverter, and
- the phase voltage input data received from the phase voltage input module;
wherein the microcontroller is further configured to determine whether APC occurs based on the fulfillment of the following conditions:
- the phase voltage violates a network voltage upper limit;
- there is a difference between the actual PV power generation data and the real-time PV inverter power output data and said difference is increasing with a rate of change greater than a predetermined threshold;
and wherein the microcontroller is further configured to prevent or reduce the APC by opening and/or closing of at least one of the primary and/or secondary relays based on said determination.

2. The APC management system according to claim 1, wherein the microcontroller is configured to;
- use day-ahead PV output power forecast data received from said remote provider to predict occurrence of APC in advance and prepare said at least one household load so that they can act as energy buffers when the rooftop PV system is disconnected from the low voltage distribution network.

3. The APC management system according to claim 1 wherein the system is connectable to a multi-phase low voltage distribution network and comprises;
a) a phase voltage input module for each phase; and
b) a plurality of primary relays configured to connect or disconnect the rooftop PV system to each of said phases.

4. The APC management system according to any one of the preceding claims wherein the system comprises a plurality of secondary relays, each configured to connect or disconnect the rooftop PV system from a plurality of household loads.

5. The APC management system according to claim 4 wherein the plurality of household loads is selected from a battery storage system, heating and/or cooling devices.

6. The APC management system according to claim 1, wherein the microcontroller is further **characterized in** being configured to use day-ahead PV output power forecast data to predict time and duration of APC in advance and take preemptive action by preparing a battery storage system and/or one or more of the at least one household loads beforehand to absorb the PV inverter output power during the APC in preventing or reducing the APC.

7. The APC management system according to any one of the preceding claims wherein the system further comprises a rooftop PV system data module configured to receive technical data of the rooftop PV system such as capacity, azimuth, inclination, and solar irradiation of the rooftop PV system; and wherein the system is configured for adjusting the received actual PV power generation data, and in dependency of claim 2 or claim 6 the day-ahead PV output power forecast data, based on the geographical location and the technical data of the rooftop PV system.

8. The APC management system according to any one of the preceding claims wherein the system further comprises the inverter mentioned in claim 1, a battery storage system and a remote central server, wherein the inverter is a curtailment handling, CH, inverter.

9. The APC management system according to claim 8, wherein the CH inverter is configured to set a nominal voltage and a nominal frequency at its AC terminals when the rooftop PV system is disconnected from the voltage phases of the low voltage distribution network.

10. A method for active power curtailment, APC, management of a rooftop photovoltaic, PV, system comprising a PV inverter connectable to at least one phase of a low voltage distribution network and at least one household load; using a microcontroller connected to at least one primary relay configured to connect or disconnect the rooftop PV system from one or more of said at least one phase and connected to at least one secondary relay configured to connect or disconnect the rooftop PV system from at least one household load(s) in a household network, said method comprising
a) providing phase voltage input data to said microcontroller, said phase voltage input data being provided by a phase voltage input module which measures voltage of the at least one phase;
b) providing actual PV power generation data to said microcontroller, said PV power generation data being based on online data received from a remote provider, said actual PV power generation data being a downscale of accumulated real-time actual PV power generation data in accordance with a geographical location of the rooftop PV system; and
c) providing real-time PV inverter power output data to said microcontroller, said real-time PV inverter power output data being provided by the PV inverter;
wherein said microcontroller determines whether APC occurs based on the fulfillment of the following conditions:
- the phase voltage violates a network voltage upper limit;
- there is a difference between the actual PV power generation data and the real-time PV inverter power output data and said difference is increasing with a rate of change greater than a predetermined threshold;
and wherein the microcontroller opens and/or closes at least one of the primary and/or secondary relays based on said determination so as to prevent or reduce the APC.

11. The method according to claim 10, wherein the microcontroller commands the respective primary relay to disconnect from the respective phase and commands at least one of the secondary relays to connect to a battery storage system and/or at least one of the household loads when the phase voltage violates a network voltage upper limit, and the real-time PV inverter power output data becomes unequal with actual PV power generation data.

12. The method according to claim 11, wherein the microcontroller further commands a curtailment handling, CH, inverter present between the at least one phase and the battery storage system, to set and maintain a nominal voltage and a nominal frequency at its AC terminals, converting the household network into a islanded grid/off-grid/nano-grid.

13. The method according to any one of claims 10 to 12 wherein the actual PV power generation data are adjusted for technical data of the rooftop PV system.

14. The method according to claim 10, further comprising providing day-ahead PV output power forecast data to the microcontroller, said forecast data being received from the remote provider, and wherein the microcontroller uses said day-ahead PV output power forecast data to prepare the battery storage system and/or at least one of the household loads in preventing or reducing the APC.

## Patentansprüche

1. Wirkleistungsbegrenzungs(APC)-Verwaltungssystem zur Verhinderung oder Reduzierung einer APC in einem Wechselrichter einer photovoltaischen, PV, Aufdachanlage, die an ein Niederspannungsnetz angeschlossen werden kann, das mindestens eine Phase und mindestens eine Haushaltslast umfasst, das Folgendes umfasst;
- ein Phasenspannungs-Eingangsmodul, das konfiguriert ist, um die Spannung der mindestens einen Phase zu messen und Phasenspannungs-Eingangsdaten bereitzustellen;
- einen Mikrocontroller;
- mindestens ein primäres Relais, das konfiguriert ist, um die PV-Aufdachanlage mit einer oder mehreren der besagten mindestens einen Phase zu verbinden oder davon zu trennen; und
- mindestens ein sekundäres Relais, das konfiguriert ist, um die PV-Aufdachanlage mit einer oder mehreren der besagten mindestens einen Haushaltslast zu verbinden oder davon zu trennen;
**gekennzeichnet dadurch, dass** das System Kommunikationsmittel umfasst, um Online-Daten von einem Remote-Provider zu empfangen, und dass der Mikrocontroller konfiguriert ist, um zu bestimmen, ob die APC auftritt, basierend auf zumindest den folgenden Eingaben:
- tatsächlichen PV-Energieerzeugungsdaten basierend auf den Online-Daten, die von dem Remote-Provider empfangen werden, wobei die besagten tatsächlichen PV-Energieerzeugungsdaten ein Downscale der akkumulierten tatsächlichen Echtzeit-PV-Energieerzeugungsdaten in Übereinstimmung mit einem geografischen Standort der PV-Aufdachanlage sind,
- den von dem Wechselrichter empfangenen Echtzeit-PV-Wechselrichter-Leistungsdaten, und
- den von dem Phasenspannungs-Eingangsmodul empfangenen Phasenspannungs-Eingangsdaten;
wobei der Mikrocontroller ferner konfiguriert ist, um zu bestimmen, ob die APC auftritt, basierend auf der Erfüllung der folgenden Bedingungen:
- die Phasenspannung überschreitet eine Obergrenze der Netzspannung;
- es besteht ein Unterschied zwischen den tatsächlichen PV-Energieerzeugungsdaten und den Echtzeit-PV-Wechselrichter-Leistungsdaten und dieser besagte Unterschied steigt mit einer Änderungsrate, die größer als eine vorbestimmte Schwelle ist;
und wobei der Mikrocontroller ferner konfiguriert ist, um die APC durch Öffnen und/oder Schließen von mindestens einem der primären und/oder sekundären Relais basierend auf der besagten Bestimmung zu verhindern oder zu reduzieren.

2. APC-Verwaltungssystem nach Anspruch 1, wobei der Mikrocontroller konfiguriert ist zum:
- Verwenden von Prognosedaten für die Day-Ahead-PV-Ausgangsleistung, die von dem besagten Remote-Provider empfangen werden, um das Auftreten einer APC im Voraus vorherzusagen und die besagte mindestens eine Haushaltslast vorzubereiten, um als Energiepuffer fungieren zu können, wenn die PV-Aufdachanlage von dem Niederspannungsnetz getrennt wird.

3. APC-Verwaltungssystem nach Anspruch 1, wobei das System an ein mehrphasiges Niederspannungsnetz angeschlossen werden kann und Folgendes umfasst;
a) ein Phasenspannungs-Eingangsmodul für jede Phase; und
b) eine Vielzahl von primären Relais, die konfiguriert sind, um die PV-Aufdachanlage mit jeder der besagten Phasen zu verbinden oder davon zu trennen.

4. APC-Verwaltungssystem nach einem der vorhergehenden Ansprüche, wobei das System eine Vielzahl von sekundären Relais umfasst, die jeweils konfiguriert sind, um die PV-Aufdachanlage mit einer Vielzahl von Haushaltslasten zu verbinden oder davon zu trennen.

5. APC-Verwaltungssystem nach Anspruch 4, wobei die Vielzahl von Haushaltslasten aus einem Batteriespeichersystem, Heiz- und/oder Kühlvorrichtungen ausgewählt sind.

6. APC-Verwaltungssystem nach Anspruch 1, wobei der Mikrocontroller ferner **dadurch gekennzeichnet ist, dass** er konfiguriert ist, um Prognosedaten für die Day-Ahead-PV-Ausgangsleistung zu verwenden, um den Zeitpunkt und die Dauer der APC im Voraus vorherzusagen und präventive Maßnahmen zu ergreifen, indem ein Batteriespeichersystem und/oder eine oder mehrere der mindestens einen Haushaltslast im Voraus vorbereitet werden, um die PV-Wechselrichter-Ausgangsleistung während der APC zu absorbieren, um die APC zu verhindern oder zu reduzieren.

7. APC-Verwaltungssystem nach einem der vorhergehenden Ansprüche, wobei das System ferner ein PV-Aufdachanlagen-Datenmodul umfasst, das konfiguriert ist, um technische Daten der PV-Aufdachanlage zu empfangen, wie z.B. Kapazität, Azimut, Neigung und Sonneneinstrahlung der PV-Aufdachanlage; und wobei das System konfiguriert ist, um die empfangenen tatsächlichen PV-Energieerzeugungsdaten und, in Abhängigkeit von Anspruch 2 oder Anspruch 6, die Prognosedaten für die Day-Ahead-PV-Ausgangsleistung basierend auf dem geografischen Standort und den technischen Daten der PV-Aufdachanlage anzupassen.

8. APC-Verwaltungssystem nach einem der vorhergehenden Ansprüche, wobei das System ferner den Wechselrichter, der in Anspruch 1 erwähnt wird, ein Batteriespeichersystem und einen zentralen Remote-Server umfasst, wobei der Wechselrichter ein Begrenzungs-Handling(CH)-Wechselrichter ist.

9. APC-Verwaltungssystem nach Anspruch 8, wobei der CH-Wechselrichter konfiguriert ist, um eine Nennspannung und eine Nennfrequenz an seinen AC-Anschlüssen einzustellen, wenn die PV-Aufdachanlage von den Spannungsphasen des Niederspannungsnetzes getrennt ist.

10. Verfahren zur Wirkleistungsbegrenzungs(APC)-Verwaltung einer PV-Aufdachanlage, die einen PV-Wechselrichter umfasst, der mit mindestens einer Phase eines Niederspannungsnetzes und mindestens einer Haushaltslast verbunden werden kann; unter Verwenden eines Mikrocontrollers, der mit mindestens einem primären Relais verbunden ist, das konfiguriert ist, um die PV-Aufdachanlage mit einer oder mehreren der besagten mindestens einen Phase zu verbinden oder davon zu trennen, und der mit mindestens einem sekundären Relais verbunden ist, das konfiguriert ist, um die PV-Aufdachanlage mit mindestens einer Haushaltslast in einem Haushaltsnetzwerk zu verbinden oder davon zu trennen, wobei das Verfahren Folgendes umfasst
a) Bereitstellen von Phasenspannungs-Eingangsdaten an den besagten Mikrocontroller, wobei die besagten Phasenspannungs-Eingangsdaten von einem Phasenspannungs-Eingangsmodul bereitgestellt werden, das die Spannung der mindestens einen Phase misst;
b) Bereitstellen tatsächlicher PV-Energieerzeugungsdaten an den besagten Mikrocontroller, wobei die besagten PV-Energieerzeugungsdaten auf Online-Daten basieren, die von einem Remote-Provider empfangen werden, wobei die besagten tatsächlichen PV-Energieerzeugungsdaten ein Downscale der akkumulierten tatsächlichen Echtzeit-PV-Energieerzeugungsdaten in Übereinstimmung mit einem geografischen Standort der PV-Aufdachanlage sind; und
c) Bereitstellen von Echtzeit-PV-Wechselrichter-Leistungsdaten an den besagten Mikrocontroller, wobei die besagten Echtzeit-PV-Wechselrichter-Leistungsdaten von dem PV-Wechselrichter bereitgestellt werden;
wobei der besagte Mikrocontroller bestimmt, ob die APC auftritt, basierend auf der Erfüllung der folgenden Bedingungen:
- die Phasenspannung überschreitet eine Obergrenze der Netzspannung;
- es besteht ein Unterschied zwischen den tatsächlichen PV-Energieerzeugungsdaten und den Echtzeit-PV-Wechselrichter-Leistungsdaten und der besagte Unterschied steigt mit einer Änderungsrate, die größer als eine vorbestimmte Schwelle ist;
und wobei der Mikrocontroller mindestens eines der primären und/oder sekundären Relais basierend auf der besagten Bestimmung öffnet und/oder schließt, um die APC zu verhindern oder zu reduzieren.

11. Verfahren nach Anspruch 10, wobei der Mikrocontroller dem jeweiligen primären Relais befiehlt, sich von der jeweiligen Phase zu trennen, und mindestens einem der sekundären Relais befiehlt, sich mit einem Batteriespeichersystem und/oder mindestens einer der Haushaltslasten zu verbinden, wenn die Phasenspannung eine Obergrenze des Spannungsnetzes überschreitet und die Echtzeit-PV-Wechselrichter-Leistungsdaten nicht mehr mit den tatsächlichen PV-Energieerzeugungsdaten übereinstimmen.

12. Verfahren nach Anspruch 11, wobei der Mikrocontroller ferner einem Begrenzungs-Handling(CH)-Wechselrichter, der sich zwischen der mindestens einen Phase und dem Batteriespeichersystem befindet, befiehlt, eine Nennspannung und eine Nennfrequenz an seinen AC-Anschlüssen einzustellen und aufrechtzuerhalten, wodurch das Haushaltsnetz in ein Inselnetz/Off-Grid/Nano-Grid umgewandelt wird.

13. Verfahren nach einem der Ansprüche 10 bis 12, wobei die tatsächlichen PV-Energieerzeugungsdaten an technische Daten der PV-Aufdachanlage angepasst werden.

14. Verfahren nach Anspruch 10, das ferner das Bereitstellen von Prognosedaten für die Day-Ahead-PV-Ausgangsleistung an den Mikrocontroller umfasst, wobei die besagten Prognosedaten von dem Remote-Provider empfangen werden und wobei der Mikrocontroller die besagten Prognosedaten für die Day-Ahead-PV-Ausgangsdaten verwendet, um das Batteriespeichersystem und/oder mindestens eine der Haushaltslasten zur Verhinderung oder Reduzierung der APC vorzubereiten.

## Revendications

1. Système de gestion de réduction de puissance active, APC, pour empêcher ou réduire l'APC dans un onduleur d'un système photovoltaïque, PV, en toiture qui peut être connecté à un réseau de distribution basse tension comprenant au moins une phase, et au moins une charge domestique, comprenant :
- un module d'entrée de tension de phase configuré pour mesurer la tension de l'au moins une phase et pour fournir des données d'entrée de tension de phase ;
- un microcontrôleur ;
- au moins un relais primaire configuré pour connecter ou déconnecter le système PV en toiture d'une ou plusieurs de ladite au moins une phase ; et
- au moins un relais secondaire configuré pour connecter ou déconnecter le système PV en toiture d'une ou plusieurs de ladite au moins une charge domestique ;
**caractérisé en ce que** le système comprend des moyens de communication pour recevoir des données en ligne d'un fournisseur distant et **en ce que** le microcontrôleur est configuré pour déterminer si l'APC se produit sur la base d'au moins les entrées suivantes :
- des données réelles de production d'énergie PV basées sur les données en ligne reçues du fournisseur distant, lesdites données réelles de production d'énergie PV étant une échelle descendante de données réelles de production d'énergie PV accumulées en temps réel conformément à un emplacement géographique du système PV en toiture,
- des données de sortie de puissance de l'onduleur PV en temps réel reçues de l'onduleur, et
- les données d'entrée de tension de phase reçues du module d'entrée de tension de phase ;
où le microcontrôleur est en outre configuré pour déterminer si l'APC se produit sur la base du respect des conditions suivantes :
- la tension de phase viole une limite supérieure de tension du réseau ;
- il existe une différence entre les données réelles de production d'énergie PV et les données de sortie de puissance de l'onduleur PV en temps réel et ladite différence augmente avec un taux de variation supérieur à un seuil prédéterminé ;
et où le microcontrôleur est en outre configuré pour empêcher ou réduire l'APC en ouvrant et/ou en fermant au moins l'un des relais primaire et/ou secondaire sur la base de ladite détermination.

2. Système de gestion APC selon la revendication 1, où le microcontrôleur est configuré pour :
- utiliser des données de prévision de puissance de sortie PV journalière reçues dudit fournisseur distant pour prédire l'occurrence d'APC à l'avance et préparer ladite au moins une charge domestique afin qu'elles puissent agir comme des tampons énergétiques lorsque le système PV en toiture est déconnecté du réseau de distribution basse tension.

3. Système de gestion APC selon la revendication 1, où le système est connectable à un réseau de distribution basse tension polyphasé et comprend :
a) un module d'entrée de tension de phase pour chaque phase ; et
b) une pluralité de relais primaires configurés pour connecter ou déconnecter le système PV en toiture à chacune desdites phases.

4. Système de gestion APC selon l'une quelconque des revendications précédentes, où le système comprend une pluralité de relais secondaires, chacun configuré pour connecter ou déconnecter le système PV en toiture d'une pluralité de charges domestiques.

5. Système de gestion APC selon la revendication 4, où la pluralité de charges domestiques est sélectionnée parmi un système de stockage de batterie, des dispositifs de chauffage et/ou de refroidissement.

6. Système de gestion APC selon la revendication 1, où le microcontrôleur est en outre **caractérisé en ce qu'**il est configuré pour utiliser des données de prévision de puissance de sortie PV journalière pour prédire l'heure et la durée de l'APC à l'avance et prendre des mesures préventives en préparant un système de stockage de batterie et/ou une ou plusieurs de l'au moins une charge domestique au préalable pour absorber la puissance de sortie de l'onduleur PV pendant l'APC en empêchant ou en réduisant l'APC.

7. Système de gestion APC selon l'une quelconque des revendications précédentes, où le système comprend en outre un module de données de système PV en toiture configuré pour recevoir des données techniques du système PV en toiture telles que la capacité, l'azimut, l'inclinaison et l'irradiation solaire du système PV en toiture ; et où le système est configuré pour ajuster les données réelles de production d'énergie PV reçues, et en fonction de la revendication 2 ou de la revendication 6, les données de prévision de puissance de sortie PV journalière, sur la base de l'emplacement géographique et des données techniques du système PV en toiture.

8. Système de gestion APC selon l'une quelconque des revendications précédentes, où le système comprend en outre l'onduleur mentionné dans la revendication 1, un système de stockage de batterie et un serveur central distant, où l'onduleur est un onduleur de gestion de réduction, CH.

9. Système de gestion APC selon la revendication 8, où l'onduleur CH est configuré pour définir une tension nominale et une fréquence nominale à ses bornes AC lorsque le système PV en toiture est déconnecté des phases de tension du réseau de distribution basse tension.

10. Procédé de gestion de réduction de puissance active, APC, d'un système photovoltaïque, PV, en toiture, comprenant un onduleur PV connectable à au moins une phase d'un réseau de distribution basse tension et au moins une charge domestique ; utilisant un microcontrôleur connecté à au moins un relais primaire configuré pour connecter ou déconnecter le système PV en toiture d'une ou plusieurs de ladite au moins une phase et connecté à au moins un relais secondaire configuré pour connecter ou déconnecter le système PV en toiture d'au moins une charge domestique dans un réseau domestique, ledit procédé comprenant :
a) fournir des données d'entrée de tension de phase audit microcontrôleur, lesdites données d'entrée de tension de phase étant fournies par un module d'entrée de tension de phase qui mesure la tension de l'au moins une phase ;
b) fournir des données réelles de production d'énergie PV audit microcontrôleur, lesdites données de production d'énergie PV étant basées sur des données en ligne reçues d'un fournisseur distant, lesdites données réelles de production d'énergie PV étant une réduction d'échelle de données réelles de production d'énergie PV accumulées en temps réel conformément à un emplacement géographique du système PV en toiture ; et
c) fournir des données de sortie de puissance d'onduleur PV en temps réel audit microcontrôleur, lesdites données de sortie de puissance d'onduleur PV en temps réel étant fournies par l'onduleur PV ;
où ledit microcontrôleur détermine si l'APC se produit sur la base du respect des conditions suivantes :
- la tension de phase viole une limite supérieure de tension du réseau ;
- il existe une différence entre les données réelles de production d'énergie PV et les données de sortie de puissance de l'onduleur PV en temps réel et ladite différence augmente avec un taux de variation supérieur à un seuil prédéterminé ;
et où le microcontrôleur ouvre et/ou ferme au moins l'un des relais primaire et/ou secondaire sur la base de ladite détermination afin d'empêcher ou de réduire l'APC.

11. Procédé selon la revendication 10, où le microcontrôleur commande au relais primaire respectif de se déconnecter de la phase respective et commande au moins à un des relais secondaires de se connecter à un système de stockage de batterie et/ou à au moins une des charges domestiques lorsque la tension de phase viole une limite supérieure de tension de réseau et les données de sortie de puissance de l'onduleur PV en temps réel deviennent inégales avec les données réelles de production d'énergie PV.

12. Procédé selon la revendication 11, où le microcontrôleur commande en outre un onduleur de gestion de réduction, CH, présent entre l'au moins une phase et le système de stockage par batterie, pour définir et maintenir une tension nominale et une fréquence nominale à ses bornes AC, convertissant le réseau domestique en réseau îloté/hors réseau/nano-réseau.

13. Procédé selon l'une quelconque des revendications 10 à 12, où les données réelles de production d'énergie PV sont ajustées pour les données techniques du système PV en toiture.

14. Procédé selon la revendication 10, comprenant en outre la fourniture de données de prévision de puissance de sortie PV journalière au microcontrôleur, lesdites données de prévision étant reçues du fournisseur distant, et où le microcontrôleur utilise lesdites données de prévision de puissance de sortie PV journalière pour préparer le système de stockage de batterie et/ou au moins une des charges domestiques pour empêcher ou réduire l'APC.
